# EUROPEAN PATENT APPLICATION

(11) **EP 4 664 496 A1**
(43) Date of publication of application: **17.12.2025**
(21) Application number: 24778548.8
(22) Date of filing: 16.01.2024
(51) Int. Cl.: H01G 2/06, H01C 7/02, H01C 7/04, H01C 7/10, H01F 27/29, H01G 2/02, H01G 4/30

(54) **MULTILAYER CERAMIC ELECTRONIC COMPONENT**

(30) Priority: 30.03.2023 JP 2023055774
(71) Applicant: Murata Manufacturing Co., Ltd., Nagaokakyo-shi, Kyoto 617-8555 (JP)
(72) Inventor: KITAGAWA Tomoki, Nagaokakyo-shi, Kyoto 617-8555 (JP); YASUDA Tatsunori, Nagaokakyo-shi, Kyoto 617-8555 (JP)
(74) Representative: Zimmermann, Tankred Klaus
(86) International application number: PCT/JP2024/000953
(87) International publication number: WO 2024/202402

(57) **Abstract**

The present invention provides a multilayer ceramic capacitor which has high adhesion strength between an external electrode and a spacer and exhibits excellent durability when mounted. A multilayer ceramic electronic component 1 according to the present invention is provided with: a capacitor main body 1A that is provided with a multilayer body 2 and two external electrodes 3 which are disposed on two end surfaces of the multilayer body 2, are connected to an internal electrode layer 15, and extend to two main surfaces of the multilayer body 2 so as to partially cover the main surfaces; and two spacers 4 that are disposed on both end surface sides of one main surface side of the capacitor main body 1A, sandwiching the external electrodes 3 partially covering the main surfaces. The spacers 4 are longer than the external electrodes 3 covering the main surfaces, in the length direction, and each contain an intermetallic compound which contains at least one of Cu and Ni as a high melting point metal and Sn as a low melting point metal, and a protective material 6. If each of the spacers 4 is divided into two parts in the length direction along a line extending in a stacking direction, the content ratio of the protective material 6 is higher in a region that is closer to a central part of the capacitor main body 1A in the length direction than in a region that is farther from the central part of the capacitor main body 1A.

## Description

### TECHNICAL FIELD

The present invention relates to a multilayer ceramic electronic component such as a multilayer ceramic capacitor.

### BACKGROUND ART

Multilayer ceramic electronic components such as multilayer ceramic capacitors are widely used in various electronic devices such as mobile terminal devices including mobile phones and personal computers. Such multilayer ceramic capacitors each include a rectangular parallelepiped-shaped multilayer body in which dielectric layers and internal electrode layers are alternately laminated, and external electrodes provided at both opposed ends of the multilayer body.

The multilayer ceramic capacitors each include an inner layer portion in which the dielectric layers and the internal electrodes are alternately laminated. Then, dielectric layers functioning as outer layer portions are provided at the top and bottom of the inner layer portion to form a rectangular parallelepiped-shaped multilayer body, and external electrodes are provided on both end surfaces in the longitudinal direction of the multilayer body to form a capacitor main body.

Furthermore, in order to suppress the occurrence of "acoustic noise", multilayer ceramic capacitors have been known that each including a spacer that covers a portion of the external electrode on a side of the capacitor main body to be mounted on a substrate (see, for example, Patent Document 1).

### Citation List

### Patent Document

Patent Document 1: Japanese Unexamined Patent Application, Publication No. 2015-216337

### DISCLOSURE OF THE INVENTION

### Problems to be Solved by the Invention

However, when the bonding strength between the capacitor main body and the spacer is weak, the spacer may peel off, which is not sufficient in terms of durability when mounted.

It is an object of the present invention to provide multilayer ceramic capacitors, each with high bonding strength between a capacitor main body and a spacer, and each with excellent durability when mounted.

### Means for Solving the Problems

In order to solve the above-described issue, a multilayer ceramic electronic component is provided which includes: a capacitor main body including a multilayer body including dielectric layers and internal electrode layers that are alternately laminated, two main surfaces that are opposed to each other in a lamination direction, two end surfaces that are opposed to each other in a length direction intersecting the lamination direction, and two lateral surfaces that are opposed to each other in a width direction intersecting the lamination direction and the length direction, and two external electrodes that are each on a corresponding one of the two end surfaces, each connected to the internal electrode layers, and each extend to the two main surfaces and the two lateral surfaces to cover a portion of each of the two main surfaces and a portion of each of the two lateral surfaces; and two spacers that are on one of the two main surfaces or one of the two lateral surfaces of the capacitor main body, the two spacers being respectively adjacent to one of the two end surfaces and adjacent to one other of the two end surfaces with a corresponding one of the two external electrodes respectively covering the portion of each of the two main surfaces or the portion of each of the two lateral surfaces interposed between the capacitor main body and a corresponding one of the two spacers, in which each of the two spacers is longer in the length direction than a corresponding one of the external electrodes covering the portion of each of the two main surfaces, and includes a metal component and a protective material, and when each of the two spacers is divided into two regions in the length direction along a line extending in the lamination direction, a region closer to a middle portion in the length direction of the capacitor main body has a higher content ratio of the protective material than a region farther from the middle portion.

### Effects of the Invention

According to one embodiment of the present invention, it is possible to provide multilayer ceramic capacitors, each with high bonding strength between a capacitor main body and a spacer, and each with excellent durability when mounted.

### BRIEF DESCRIPTION OF THE DRAWINGS

FIG. 1 is a schematic perspective view of a multilayer ceramic capacitor 1.
FIG. 2 is a cross-sectional view taken along the line II-II in FIG. 1 of the multilayer ceramic capacitor 1.
FIG. 3 is a cross-sectional view taken along the line III-III in FIG. 1 of the multilayer ceramic capacitor 1.
FIG. 4 is an enlarged view of a portion of a spacer 4 in the cross-sectional view of the multilayer ceramic capacitor 1 shown in FIG. 2.
FIG. 5 is a flowchart explaining a manufacturing method of the multilayer ceramic capacitor 1.
FIG. 6 is a diagram explaining a multilayer body manufacturing step S1 and an external electrode formation step S2.
FIG. 7 is a diagram explaining a protective material and reinforcement member paste placement step S3, a spacer paste placement step S4, and a reflow step S5.
FIG. 8 is a flowchart showing a protective material 6 and reinforcement member formation step in a modified example.
FIG. 9 is a diagram explaining a protective material 6 and reinforcement member formation step in a modified example.

### PREFERRED MODE FOR CARRYING OUT THE INVENTION

In the following, a multilayer ceramic capacitor 1 will be described as an embodiment of the multilayer ceramic electronic component of the present invention, but the present invention is not limited thereto. Also, the drawings may be schematically simplified to explain the contents of the invention, and the ratio of dimensions of the components or between components depicted may not match the ratio of their dimensions described in the specification. Also, components described in the specification may be omitted in the drawings, or the number of components may be reduced in the drawings.

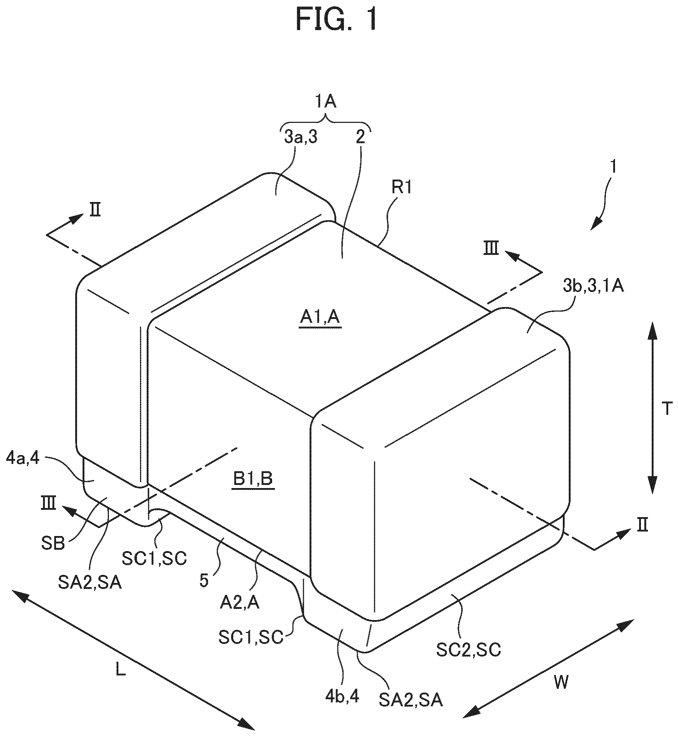

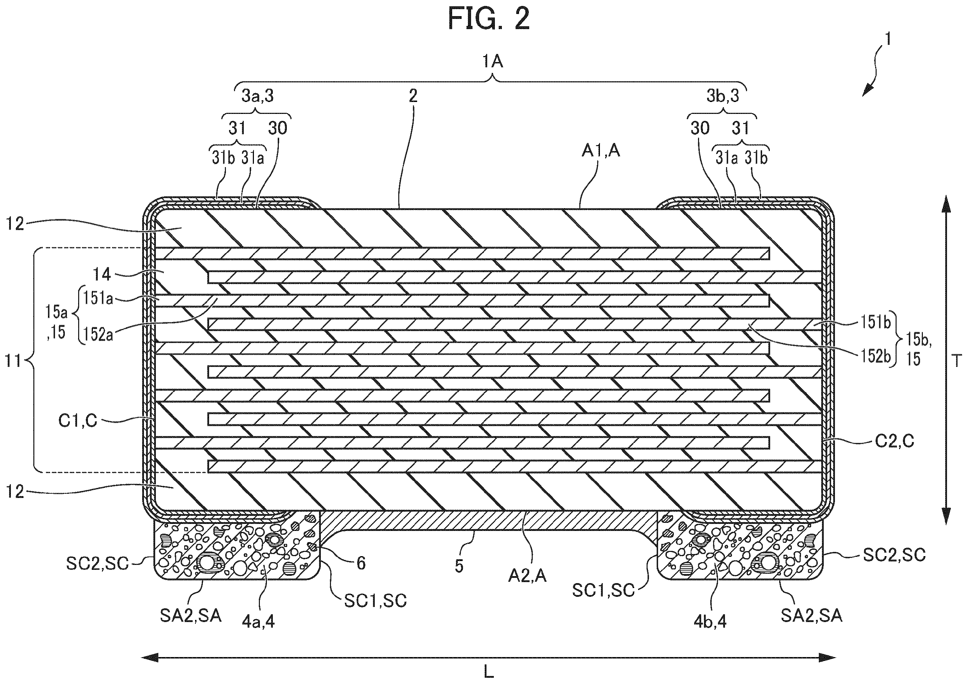

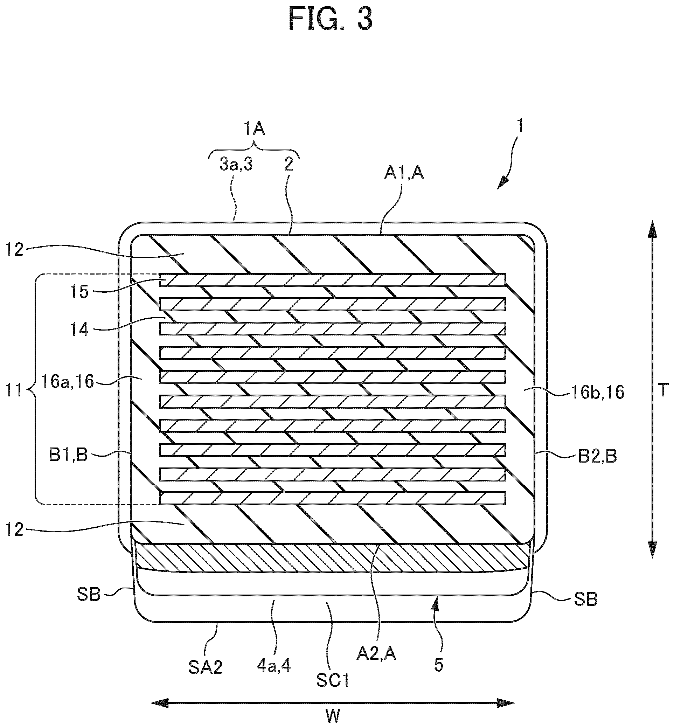

FIG. 1 is a schematic perspective view of a multilayer ceramic capacitor 1 according to an embodiment. FIG. 2 is a cross-sectional view taken along the line II-II in FIG. 1 of the multilayer ceramic capacitor 1 according to the embodiment. FIG. 3 is a cross-sectional view taken along the line III-III in FIG. 1 of the multilayer ceramic capacitor 1 according to the embodiment.

The multilayer ceramic capacitor 1 has a substantially rectangular parallelepiped shape, and includes a capacitor main body 1A having a multilayer body 2 and a pair of external electrodes 3 provided at both ends of the multilayer body 2, spacers 4 attached to the capacitor main body 1A and including a protective material 6, and a reinforcement member 5 provided between the two spacers 4. The multilayer body 2 includes an inner layer portion 11 including dielectric layers 14 and internal electrode layers 15 laminated together.

In the following description, as a term representing the orientation of the multilayer ceramic capacitor 1, the direction in which the pair of external electrodes 3 are provided in the multilayer ceramic capacitor 1 is defined as the length direction L. The direction in which the dielectric layers 14 and the internal electrode layers 15 are stacked (or laminated) is defined as the lamination direction T. The direction intersecting both the length direction L and the lamination direction T is defined as the width direction W. In addition, in the embodiments, the width direction W is orthogonal to both the length direction L and the lamination direction T.

### (Outer Surfaces of the Multilayer Body 2)

Among the six outer surfaces of the multilayer body 2, a pair of outer surfaces opposed to each other in the lamination direction T is defined as a first main surface A1 and a second main surface A2, a pair of outer surfaces opposed to each other in the width direction W is defined as a first lateral surface B1 and a second lateral surface B2, and a pair of outer surfaces opposed to each other in the length direction L is defined as a first end surface C1 and a second end surface C2. When there is no need to particularly distinguish between the first main surface A1 and the second main surface A2, they are collectively referred to as main surfaces A, when there is no need to particularly distinguish between the first lateral surface B1 and the second lateral surface B2, they are collectively referred to as lateral surfaces B, and when there is no need to particularly distinguish between the first end surface C1 and the second end surface C2, they are collectively referred to as end surfaces C.

The multilayer body 2 preferably has rounded ridge portions R1 including corner portions. The ridge portions R1 are portions where two surfaces of the multilayer body 2 intersect, i.e., the main surface A and the lateral surface B, the main surface A and the end surface C, or the lateral surface B and the end surface C intersect.

### (Multilayer Body 2)

The multilayer body 2 includes an inner layer portion 11 that forms capacitance, outer layer portions 12 that sandwich the inner layer portion 11 from the lamination direction T, and side gap portions 16 that sandwich the inner layer portion 11 and the outer layer portions 12 from the width direction W.

### (Inner Layer Portion 11)

The inner layer portion 11 includes dielectric layers 14 and internal electrode layers 15 alternately laminated along the lamination direction T.

### (Dielectric Layer 14)

The dielectric layers 14 are each made of a ceramic material. As the ceramic material, for example, a dielectric ceramic with BaTiO₃ as a main component is used.

### (Internal Electrode Layer 15)

The internal electrode layers 15 include a plurality of first internal electrode layers 15a and a plurality of second internal electrode layers 15b. The first internal electrode layers 15a and the second internal electrode layers 15b are alternately provided. The first internal electrode layers 15a each include a first counter portion 152a opposed to a corresponding one of the second internal electrode layers 15b, and a first extension portion 151a extending from the first counter portion 152a toward the first end surface C1. The end portion of the first extension portion 151a is exposed at the first end surface C1 and is electrically connected to the first external electrode 3a described later. The second internal electrode layers 15b each include a second counter portion 152b opposed to a corresponding one of the first internal electrode layers 15a, and a second extension portion 151b extending from the second counter portion 152b toward the second end surface C2. The end portion of the second extension portion 151b is electrically connected to the second external electrode 3b described later. Electric charge is accumulated in the first counter portion 152a of each of the first internal electrode layers 15a and the second counter portion 152b of each of the second internal electrode layers 15b.

The internal electrode layers 15 are preferably formed of a metal material such as nickel (Ni), copper (Cu), silver (Ag), palladium (Pd), silver-palladium (Ag-Pd) alloy, gold (Au), etc.

### (Outer Layer Portion 12)

The outer layer portion 12 can be made of the same material as the dielectric layers 14 of the inner layer portion 11.

### (Side Gap Portion 16)

The side gap portions 16 sandwich the inner layer portion 11 and the outer layer portion 12 from the width direction W. The side gap portions 16 include a first side gap portion 16a that functions as the first lateral surface B1 of the multilayer ceramic capacitor 1, and a second side gap portion 16b that functions as the second lateral surface B2 of the multilayer ceramic capacitor 1. The side gap portion 16 can be formed of the same material as the dielectric layer 14.

### (External Electrode 3)

The external electrode 3 includes a first external electrode 3a provided on the first end surface C1, and a second external electrode 3b provided on the second end surface C2. The external electrode 3 covers not only the end surface C, but also a portion of the main surface A and a portion of the lateral surface B continuous with the end surface C.

As described above, the end portion of the first extension portion 151a of each of the first internal electrode layers 15a is exposed at the first end surface C1, and electrically connected to the first external electrode 3a. Furthermore, the end portion of the second extension portion 151b of each of the second internal electrode layers 15b is exposed at the second end surface C2, and is electrically connected to the second external electrode 3b. This provides a configuration in which a plurality of capacitor elements are electrically connected in parallel between the first external electrode 3a and the second external electrode 3b.

The external electrodes 3 each include, for example, a base electrode layer 30 and a plated layer 31. However, it is not necessarily required that the external electrodes 3 include such a layered configuration.

The base electrode layer 30 is formed, for example, by applying and firing an electrically conductive paste containing copper (Cu). The base electrode layer 30 may also include glass and ceramic material. The configuration of the base electrode layer 30 is not limited thereto.

The plated layer 31 includes a nickel (Ni) plated layer 31a provided on the surface of the base electrode layer 30, and a tin (Sn) plated layer 31b provided on the surface of the nickel (Ni) plated layer 31a. The configuration of the plated layer 31 is not limited thereto.

### (Spacer 4)

The spacer 4 includes a pair of a first spacer 4a and a second spacer 4b. The first spacer 4a is provided on the second main surface A2, which is a substrate mounting surface of the capacitor main body 1A, and adjacent to the end surface C1 located on one side in the length direction L. The second spacer 4b is provided on the second main surface A2 and adjacent to the end surface C2 located on the other side in the length direction L. Each spacer 4 connects with a portion of the external electrode 3 provided on the second main surface A2. When the substrate mounting surface of the capacitor main body 1A is the first lateral surface B1, the first spacer 4a is provided on the first lateral surface B1, which is a substrate mounting surface of the capacitor main body 1A, and adjacent to the end surface C1 located on one side in the length direction L. The second spacer 4b is provided on the first lateral surface B1 and adjacent to the end surface C2 located on the other side in the length direction L.

In the following, in each spacer 4, the two surfaces that are opposed to each other in the lamination direction T are defined as spacer main surfaces SA, the two surfaces that are opposed to each other in the length direction L are defined as spacer end surfaces SC, and the two surfaces that are opposed to each other in the width direction W are defined as spacer lateral surfaces SB.

In addition, among the two spacer end surfaces SC, a spacer end surface SC adjacent to the middle portion in the length direction L of the capacitor main body 1A is defined as a middle-side spacer end surface SC1, and a spacer end surface SC on the outer side in the length direction L of the multilayer body 2 is defined as an outer side spacer end surface SC2.

Among the two spacer main surfaces SA, the spacer main surface SA adjacent to the capacitor main body 1A is defined as the main body-side spacer main surface SA1, and the spacer main surface SA on the other side is defined as the mounting-side spacer main surface SA2. When the substrate mounting surface of the capacitor main body 1A is the first lateral surface B1, among the two spacer lateral surfaces SB, the spacer lateral surface SB adjacent to the capacitor main body 1A is defined as the main body-side spacer lateral surface SB1, and the spacer lateral surface SB on the other side is defined as the mounting-side spacer main surface SB2.

In one embodiment, the length in the length direction L of each spacer 4 is longer than a corresponding one of the external electrodes 3 provided on the second main surface A2. That is, the middle-side spacer end surface SC1 of each spacer 4 is located beyond a corresponding one of the external electrodes 3 in the length direction L. This provides a portion where the main body-side spacer main surface SA1 of each of the spacers 4 is in direct contact with the second main surface A2 of the multilayer body 2. However, the present invention is not limited thereto, and the length in the length direction L of each spacer 4 may be shorter than a corresponding one of the external electrodes provided on the second main surface A2. The same also applies when the substrate mounting surface of the capacitor main body 1A is the first lateral surface B1.

In one embodiment, the external electrodes 3 each include the base electrode layer 30 and the plated layer 31 that covers the base electrode layer 30, and each spacer 4 is provided on the surface of the plated layer 31. However, for example, each spacer 4 may be provided on the surface of the base electrode layer 30, and a second plated layer may cover each spacer 4 and the base electrode layer 30. By providing the second plated layer, the bonding strength between each spacer 4 and the base electrode layer 30 is improved.

### (Material of Spacer 4)

Each spacer 4 includes either copper (Cu) or nickel (Ni) as metal powder and tin (Sn) as metal. The copper (Cu) and nickel (Ni) may be coated with silver (Ag). In addition, each spacer 4 may further include silver (Ag) as a metal constituting an intermetallic compound.

The intermetallic compound formed by adding tin (Sn) to either copper (Cu) or nickel (Ni) has a melting point that does not melt even when soldering is performed when mounting the multilayer ceramic capacitor 1 on a wiring board, and no deformation due to heat occurs. Therefore, the shape of each spacer 4 can be reliably maintained, and it is possible to provide each spacer 4 while maintaining the desired form even during soldering. In particular, an intermetallic compound formed by adding tin (Sn) to an alloy of copper (Cu) and nickel (Ni) is preferable as a component for forming each spacer 4.

The metal region MP formed by the metal powder may include a phenol resin. The phenol resin coats the intermetallic compound particles and is scattered to fill the gaps between the particles. The phenol resin may not completely coat the intermetallic compound particles. In addition, by using a phenol resin, the amount of gas generated during the heat treatment when forming each spacer 4 can be reduced, thereby reducing voids in each spacer 4. The phenol resin may be exposed on the surface of each spacer 4 and cover at least a portion of the surface of each spacer 4. By covering the surface of each spacer 4 with a phenol resin, the smoothness of the surface of each spacer 4 is improved, and the mechanical strength of each spacer 4 can be increased.

Examples of the phenol resin include novolac-type phenol resins such as phenol novolac resin, phenol aralkyl resin, cresol novolac resin, tert-butylphenol novolac resin, and nonylphenol novolac resin, resol-type phenol resin, polyoxystyrenes such as polyparaoxystyrene, and the like.

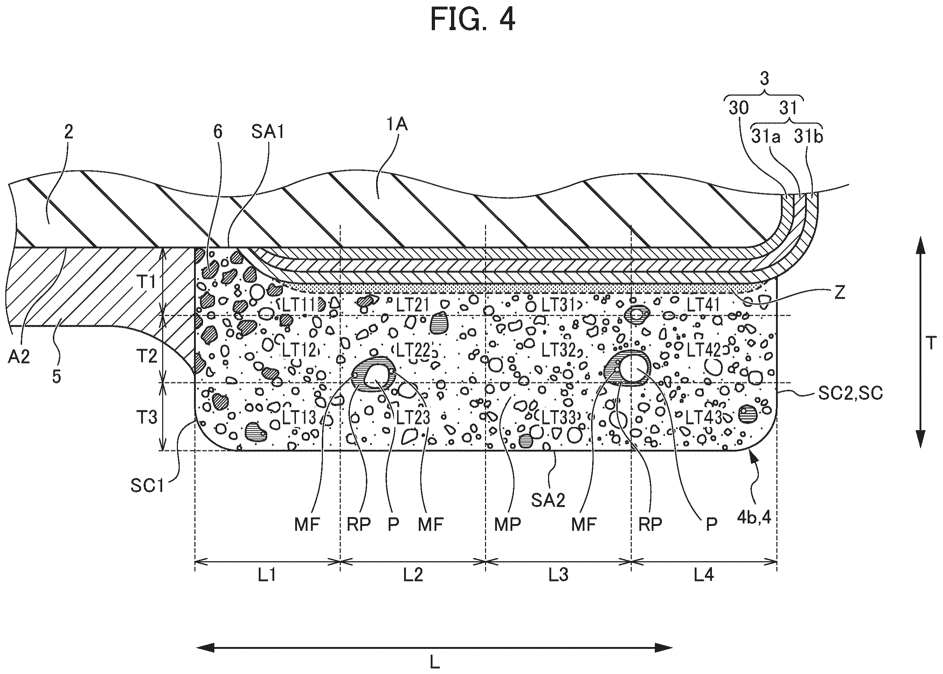

FIG. 4 is an enlarged view of a portion of one of the spacers 4 in the cross-sectional view of the multilayer ceramic capacitor 1 shown in FIG. 2. As shown in FIG. 4, the resin region RP formed by phenol resin may include metal powder MF. The metal powder MF inhibits the shrinkage of the phenol resin, and can relax the compressive stress due to the phenol resin.

The spacer 4 preferably has a void ratio of 20% or less in the region Z within 5 µm from the interface with a corresponding one of the external electrodes 3. By keeping the void ratio low, the bonding area of the spacer 4 that bonds with the external electrode 3 increases, thereby improving the bonding strength with the external electrode 3.

Inside the spacer 4, voids P are provided, and the maximum diameter of the voids P is preferably 1/2 or less of the maximum dimension in the thickness of the spacer 4 in the lamination direction T. If it exceeds 1/2, cracks are likely to occur with the voids P as starting points, reducing the strength of the spacer 4. When the substrate mounting surface of the capacitor main body 1A is the first lateral surface B1, the maximum diameter of the voids P formed inside the spacer 4 is preferably 1/2 or less of the maximum dimension in the thickness of the spacer 4 in the width direction W.

In the above, a configuration including metal intermetallic compounds and a phenol resin is shown as an example of the spacer material, but the present invention is not limited thereto, and may include different types of metal components, or may include resins other than the phenol resin such as an epoxy resin and rosin, and/or a glass component. Also, it may be formed without including resin. It may be manufactured with a material containing copper or copper alloy, and provided to be connected via Ni plating and solder.

When the spacer 4 is smaller than the external electrode 3 in a plan view from the direction connecting the surface to which the spacer 4 is applied and the surface opposed to that surface, it is preferable to provide a direction identification means to at least a portion of the spacer 4. The direction identification means indicates the direction for opposing the second main surface A2 or the first lateral surface B1 where the spacer 4 is provided toward the wiring board when mounting the multilayer ceramic capacitor 1 on the wiring board, and can include means such as coloring the spacer 4 with a color different from the external electrode 3, printing a direction identification mark such as a QR code (registered trademark) for identifying the direction, or providing a recessed portion in a part of the multilayer body. As a means for coloring, the phenol resin contained in the spacer 4 may be exposed on the surface of the spacer 4 to exhibit a color different from the external electrode 3. Even when the spacer 4 is larger than the external electrode 3, a direction identification means may be provided.

For example, when the color tone of the spacer 4 and the external electrode 3 are similar to each other, it may not be possible to determine which side has the surface to which the spacer 4 is applied when viewed from above, potentially causing image processing errors. However, by providing a direction identification mark, such image processing errors can be prevented.

### (Protective Material 6)

In one embodiment, each spacer 4 further includes a protective material 6 inside. The protective material 6 preferably includes resin, water repellent agent, ceramics, glass, and the like. As the resin material, it may include an epoxy resin as a main component and may be combined with a phenol resin as a curing agent, and a curing accelerator added thereto. In this case, the curing agent may be of, for example, an acid anhydride system, amine system, ester system, or the like.

Furthermore, the protective material 6 has higher bonding strength with, for example, the dielectric components included in the multilayer body 2 than the intermetallic compound included in each spacer 4. In this case, the adhesion between the multilayer body 2 and each spacer 4 can be made stronger by the bonding between the protective material 6 and the multilayer body 2.

### (Content of Protective material 6 in Length Direction L)

As shown in FIG. 4, one of the spacers 4 is divided into four regions L1, L2, L3, and L4 along lines, each extending in the lamination direction T, from the middle-side spacer end surface SC1 toward the outer-side spacer end surface SC2 in the length direction L.

When considering two divided regions as L1+L2 and L3+L4, the content ratio of the protective material 6 is preferably higher in the region L1+L2 closer to the middle portion of the capacitor main body in the length direction L than in the region L3+L4 farther from the middle portion.

Furthermore, when considering four divided regions as L1, L2, L3, and L4, the content ratio of the protective material 6 is preferably highest in the region L1 closest to the middle portion of the capacitor main body in the length direction L, followed by the region L2 which is the second closest to the middle portion, and it is more preferable that the content ratio of the protective material 6 decreases in order from the region L1 closest to the middle portion, to L2, L3, and L4.

### (Content of Protective Material 6 in Lamination Direction T)

The spacer 4 is divided into the three regions T1, T2, and T3 along lines each extending in the length direction L. T1 is closest to the capacitor main body 1A. In other words, T1, T2, and T3 are provided in this order from the main body-side spacer main surface SA1 toward the mounting-side spacer main surface SA2 in the lamination direction T.

At this time, it is preferable that the content ratio of the protective material 6 is higher in the region T1 closest to the capacitor main body 1A than in the region T3 farthest from the capacitor main body 1A. It is preferable that the content ratio of the metal component in each spacer 4 is highest in the region T3. When the content ratio of the metal component is high in the region T3 that bonds with solder, a strong bond between the solder and each spacer 4 is ensured.

### (Content of Protective material 6 in Length Direction L and Lamination Direction T)

Each spacer 4 is divided into the four regions L1, L2, L3, and L4 in the length direction L from the middle-side spacer end surface SC1 toward the outer-side spacer end surface SC2. Further, each spacer 4 is divided into the three regions T1, T2, and T3 in the lamination direction T. T1 is closest to the capacitor main body 1A in the lamination direction T. T1, T2, and T3 are provided in this order from the main body-side spacer main surface SA1 toward the mounting-side spacer main surface SA2. Therefore, each spacer 4 has a total of 12 divided regions.

At this time, it is preferable that the content ratio of the protective material 6 is highest in the region LT11, which corresponds to the region L1 closest to the middle-side spacer end surface SC1 and the region T1 closest to the capacitor main body 1A. Further, it is preferable that the content ratio of the protective material 6 decreases as approaching the outer-side spacer end surface SC2 and the mounting-side spacer main surface SA2, and the content ratio of the protective material 6 is lowest in the region LT43, which corresponds to L4 and T3.

As described above, in one embodiment, each spacer 4 is longer than the length in the length direction L of a corresponding one of the external electrodes 3 provided on the second main surface A2. That is, the main body-side spacer main surface SA1 of each spacer 4 is in direct contact with the second main surface A2 of the multilayer body 2 that is not covered by a corresponding one of the external electrodes 3. The portion in direct contact therewith corresponds to the region LT11 with the highest content ratio of the protective material 6. Therefore, each spacer 4 is firmly bonded to the multilayer body 2 by the bond between the protective material 6 and the dielectric components of the multilayer body 2.

In each spacer 4, since the content ratio of the protective material 6 decreases as approaching the outer-side spacer end surface SC2, the intermetallic compound and metal component relatively increase. Further, each spacer 4 is in contact with a corresponding one of the external electrodes 3 at a portion adjacent to the outer-side spacer end surface SC2 such that it is possible for each spacer 4 to include a larger contact area between a corresponding one of the external electrodes 3, and the intermetallic compound and metal component. This ensures favorable electrical conduction between the spacers 4 and the external electrodes 3 and increases the bonding strength.

Furthermore, since the content ratio of the protective material 6 in each spacer 4 decreases and the metal component increases as approaching the mounting-side spacer main surface SA2, a strong bond between the solder and each spacer 4 is ensured.

### (Reinforcement Member 5)

As shown in FIG. 1, the reinforcement member 5 is provided between the two spacers 4 to cover the second main surface side of the capacitor main body 1A. At this time, the length in the length direction of each of the external electrodes provided on the main surface and the length in the length direction of each of the spacers may be approximately the same, or the length in the length direction of each of the external electrodes may be longer than the length in the length direction of each of the spacers.

### (Material of Reinforcement Member 5)

It is preferable that the main component of the reinforcement member 5 is the same as the main component of the protective material 6. By having the same main component, the protective material 6 of each spacer 4 and the reinforcement member 5 bond together, thereby improving the bonding strength between each spacer 4 and the protective material 6.

### (Shape of Reinforcement Member 5)

As shown in FIG. 2, the reinforcement member 5 is continuously provided in the length direction L between the middle-side spacer end surface SC1 of one spacer 4 and the middle-side spacer end surface SC1 of the other spacer 4, and covers the second main surface A2 of the capacitor main body 1A (multilayer body 2) and each of the middle-side spacer end surfaces SC1 of the two spacers 4. Therefore, it is possible to protect the capacitor main body 1A more firmly. When the substrate mounting surface of the capacitor main body 1A is the first lateral surface B1, it covers the first lateral surface B1 of the capacitor main body 1A (multilayer body 2) and each of the middle-side spacer end surfaces SC1 of the two spacers 4.

However, the reinforcement member 5 does not necessarily need to be continuous between the first spacer 4a and the second spacer 4b. The reinforcement member 5 may be provided discontinuously by dividing it into one portion covering the middle-side spacer end surface SC1 of the first spacer 4a and a portion of the second main surface A2 of the capacitor main body 1A (multilayer body 2), and another portion covering the middle-side spacer end surface SC1 of the second spacer 4b and a portion of the second main surface A2 of the capacitor main body 1A (multilayer body 2). In a case where the substrate mounting surface of the capacitor main body 1A is the first lateral surface B1, the reinforcement member 5 may be provided discontinuously by dividing it into one portion covering the middle-side spacer end surface SC1 of the first spacer 4a and a portion of the first lateral surface B1 of the capacitor main body 1A (multilayer body 2), and another portion covering the middle-side spacer end surface SC1 of the second spacer 4b and a portion of the first lateral surface B1 of the capacitor main body 1A (multilayer body 2).

### (Measurement Method)

The content ratio of the protective material 6 can be measured as follows. First, one spacer 4 is polished until the dimension in the width direction W of the spacer 4 becomes 1/2 so that the cross-section of the spacer lateral surface SB is visible.

The cross section of the spacer 4 is photographed using a microscope (Axio (registered trademark)-Imager-MAT, manufactured by ZEISS) at a total magnification of 100 to 500 times.

In the captured image, the spacer 4 is divided into three regions in the lamination direction T along lines extending in the length direction L, and also divided into two or four regions in the length direction L along lines extending in the lamination direction T, at the region where the thickness in the lamination direction T of the spacer 4 is the thickest.

### (Method of Manufacturing Multilayer Ceramic Capacitor 1)

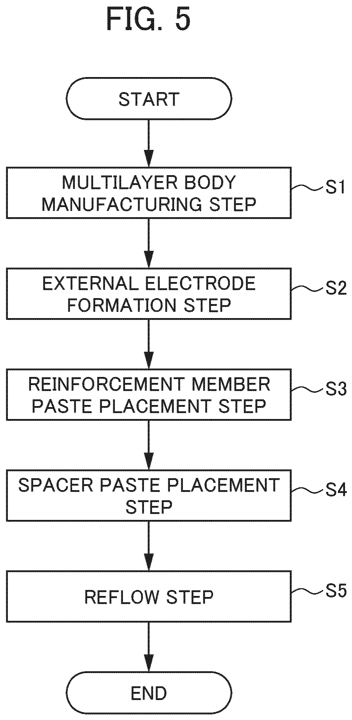

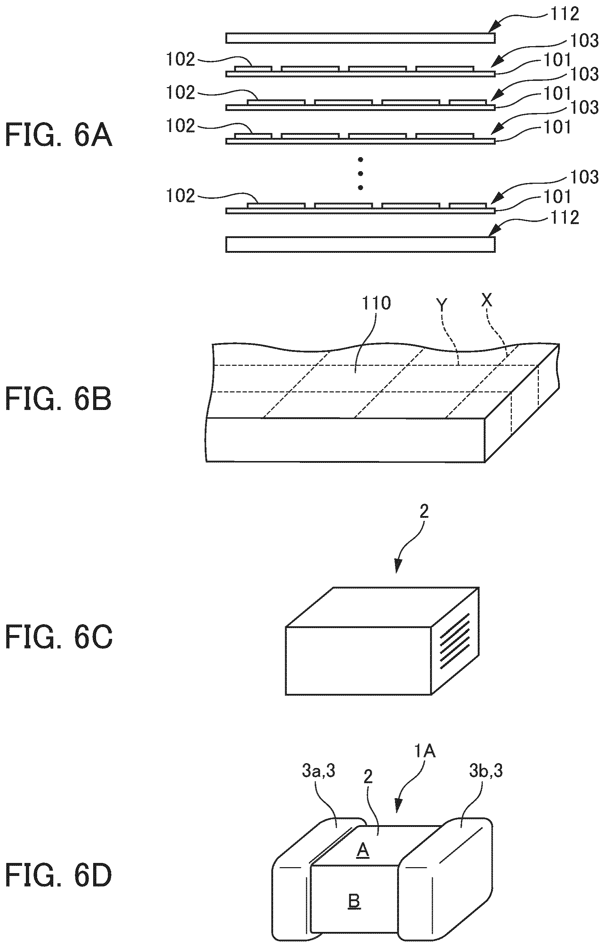

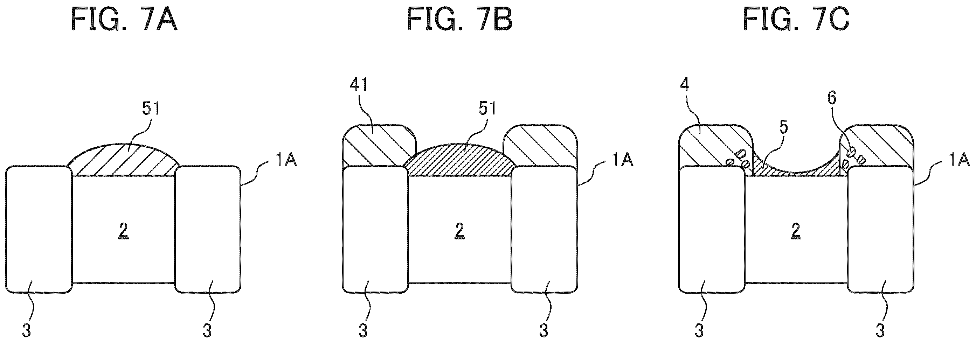

FIG. 5 is a flowchart explaining a method of manufacturing the multilayer ceramic capacitor 1. The method of manufacturing the multilayer ceramic capacitor 1 includes a multilayer body manufacturing step S1, an external electrode formation step S2, a protective material and reinforcement member paste placement step S3, a spacer paste placement step S4, and a reflow step S5. FIG. 6 is a diagram explaining the multilayer body manufacturing step S1 and the external electrode formation step S2. FIG. 7 is a diagram explaining the protective material and reinforcement member paste placement step S3, the spacer paste placement step S4, and the reflow step S5.

### (Multilayer Body Manufacturing Step S1)

A ceramic slurry containing ceramic powder, binder, and solvent is formed into a sheet on the surface of a carrier film using a die coater, gravure coater, micro gravure coater, etc., to create a multilayer ceramic green sheet 101 that functions as the dielectric layer 14. Next, a material sheet 103 is created by printing an electrically conductive paste in a strip pattern on the multilayer ceramic green sheet 101 by screen printing, inkjet printing, gravure printing, etc., and printing an electrically conductive pattern 102 that functions as the internal electrode layer 15 on the surface of the multilayer ceramic green sheet 101.

Next, as shown in FIG. 6A, a plurality of material sheets 103 are stacked such that the electrically conductive patterns 102 face in the same direction and the electrically conductive patterns 102 are offset from each other by, for example, half a pitch in the length direction L between adjacent material sheets 103. Furthermore, ceramic green sheets 112 for outer layer portions, which function as the outer layer portions 12, are stacked on both sides of the plurality of stacked material sheets 103.

The plurality of stacked material sheets 103 and the ceramic green sheets 112 for outer layer portions are pressed together using a hydrostatic press or the like to create a mother block 110 as shown in FIG. 6B.

Next, the mother block 110 is cut along cutting lines X and cutting lines Y that intersect the cutting lines X as shown in FIG. 6B to manufacture a plurality of multilayer bodies 2 as shown in FIG. 6C.

### (External Electrode Formation Step S2)

Next, a base electrode layer 30 is formed by applying and firing an electrically conductive paste containing copper (Cu) to the end surfaces C of the multilayer body 2. The base electrode layer 30 extends not only on both end surfaces C of the multilayer body 2, but also to the main surfaces A and lateral surfaces B, so as to cover a portion of the main surfaces A adjacent to the end surfaces C. Then, a plated layer 31 is formed on the surface of the base electrode layer 30, including a nickel (Ni) plated layer 31a and a tin (Sn) plated layer 31b provided on the surface of the nickel (Ni) plated layer 31a, to manufacture a capacitor main body 1A as shown in FIG. 6D. The configuration of the external electrode is not limited thereto.

### (Reinforcement Member Paste Placement Step S3)

In one embodiment, the protective material 6 and the reinforcement member are made of the same material. In this case, first, the surface of the capacitor main body 1A on which a spacer 4 is provided is cleaned with a solvent, and as shown in FIG. 7A, a reinforcement member paste 51 is applied between the two external electrodes 3.

### (Spacer Paste Placement Step S4)

Next, as shown in FIG. 7B, a spacer paste 41 is applied on the external electrodes 3 of the capacitor main body 1A in a state where the reinforcement member paste 51 is applied between the two external electrodes 3. At this time, the spacer paste 41 is applied to cover not only the external electrodes 3, but also a portion of the reinforcement member paste 51.

### (Reflow Step S5)

Next, as shown in FIG. 7C, the uncured reinforcement member paste 51 and the uncured spacer paste 41 are simultaneously cured by reflow. At this time, the reinforcement member enters the region of the spacer paste 41 adjacent to the reinforcement member paste 51 as the protective material 6. This makes it possible to form a region with a high content of the protective material 6. In addition, by increasing the amount of the reinforcement member paste 51 at this time, it is possible to increase the content of the protective material 6 in the spacer 4.

### (Modified Example)

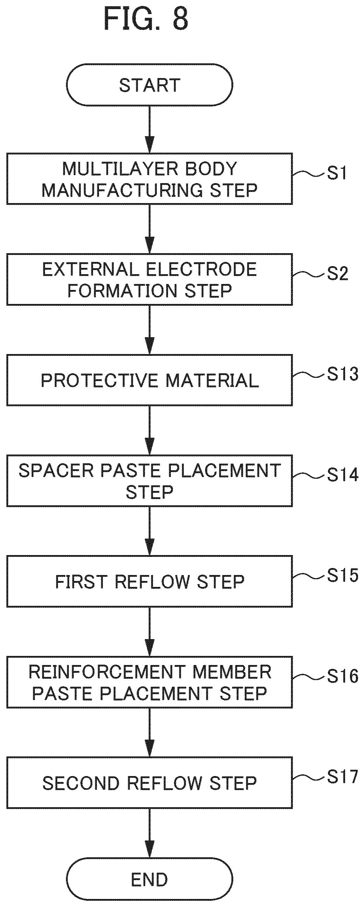

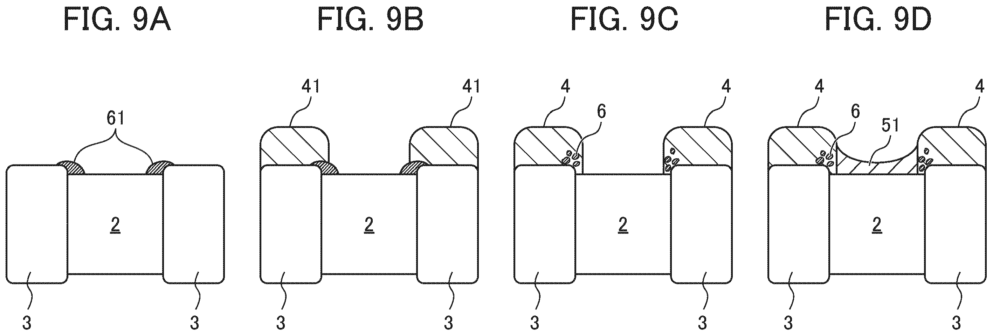

In a case of a modified example in which the protective material 6 and the reinforcement member 5 are made of different materials, the following steps are performed in order as shown in FIGS. 8 and 9, after the external electrode formation step S2. FIG. 8 is a flowchart showing the protective material 6 and reinforcement member formation step in the modified example, and FIG. 9 is a diagram explaining the protective material 6 and reinforcement member formation step in the modified example.

### (Protective Material Paste Placement Step S13)

As shown in FIG. 9A, a protective material paste 61 which functions as the material of the protective material 6 is applied by a dispenser or squeegee printing to the portion where the multilayer body 2 is exposed between the external electrodes 3 of the capacitor main body 1A. The protective material paste 61 is applied so as to be in contact with the external electrodes 3 and not to cover 15% or more of the area of the external electrodes 3.

### (Spacer Paste Placement Step S14)

As shown in FIG. 9B, a spacer paste 41 is applied on the capacitor main body 1A on which the protective material paste 61 has been applied.

### (First Reflow Step S15)

As shown in FIG. 9C, reflow is performed with the protective material paste 61 and the spacer paste 41 applied to the capacitor main body 1A. By simultaneously curing the uncured protective material paste 61 and spacer paste 41 by reflow, spacers 4 can be formed in which the content ratio of the protective material 6 differ depending on locations. In addition, by changing the amount and position of application of the protective material 6, it is possible to control the content ratio of the protective material 6 in each spacer 4.

### (Reinforcement Member Paste Placement Step S16)

As shown in FIG. 9D, the surface of the capacitor main body 1A on which each spacer 4 is provided is cleaned with a solvent, and a reinforcement member paste 51 is provided between the two spacers 4 on the capacitor main body 1A on which each spacer 4 is provided, using a dispenser or squeegee printing.

### (Second Reflow Step S17)

Next, reflow is performed on the capacitor main body 1A on which the reinforcement member paste 51 is provided between the two spacers 4. The uncured reinforcement member paste 51 is cured by reflow. The multilayer ceramic capacitor 1 of the embodiment is manufactured through the above steps.

According to the multilayer ceramic capacitor 1 of the embodiments, since the spacers 4 are attached to the capacitor main body 1A, it is possible to buffer the vibration generated in the capacitor main body 1A by the spacers 4, and it is possible to suppress the vibration transmitted to the mounting substrate.

Further, according to the multilayer ceramic capacitor 1 of the embodiment, since the reinforcement member 5 is attached between the spacers 4, it is possible to strengthen the bonding strength between the external electrode 3 and the spacers 4, and it is possible to prevent the spacers 4 from peeling off from the capacitor main body 1A.

Each spacer 4 is longer in the length direction L than the portion of each of the external electrodes 3 covering the second main surface A2 of the capacitor main body 1A. Further, each spacer 4 includes an intermetallic compound containing at least one of Cu or Ni as a high melting point metal and Sn as a low melting point metal, and a protective material.

In addition, the protective material 6 has higher bonding strength with components included in the multilayer body 2, such as dielectric components, than the intermetallic compound included in each spacer 4.

Furthermore, when each spacer 4 is divided into two regions in the length direction L, the region closer to the middle portion in the length direction L of the capacitor main body 1A has a higher content ratio of the protective material 6 than the region farther from the middle portion in the length direction of the capacitor main body 1A.

In this way, the joining portion between each spacer 4 and the multilayer body 2 has a high content ratio of the protective material 6. Since the bonding strength between the protective material 6 and the dielectric components of the multilayer body 2 is strong, it is possible to ensure a strong bond between each spacer 4 and the multilayer body 2.

Further, the joining portion between each spacer 4 and a corresponding one of the external electrodes 3 has a low content ratio of the protective material and contains more intermetallic compound. Therefore, it is possible to ensure a strong bond between each spacer 4 and a corresponding one of the external electrodes 3 by the metal bonding between the intermetallic compound of each spacer 4 and a corresponding one of the external electrodes 3.

Although embodiments of the present invention have been described above, the present invention is not limited to the embodiments, and can be implemented in various modes without departing from the gist of the present invention. The present invention includes the following combinations.

<1> A multilayer ceramic electronic component includes: a capacitor main body including a multilayer body including dielectric layers and internal electrode layers that are alternately laminated, two main surfaces that are opposed to each other in a lamination direction, two end surfaces that are opposed to each other in a length direction intersecting the lamination direction, and two lateral surfaces that are opposed to each other in a width direction intersecting the lamination direction and the length direction, and two external electrodes that are each on a corresponding one of the two end surfaces, each connected to the internal electrode layers, and each extend to the two main surfaces and the two lateral surfaces to cover a portion of each of the two main surfaces and a portion of each of the two lateral surfaces; and two spacers that are on one of the two main surfaces or one of the two lateral surfaces of the capacitor main body, the two spacers being respectively adjacent to one of the two end surfaces and adjacent to one other of the two end surfaces with a corresponding one of the two external electrodes respectively covering the portion of each of the two main surfaces or the portion of each of the two lateral surfaces interposed between the capacitor main body and a corresponding one of the two spacers. Each of the two spacers is longer in the length direction than a corresponding one of the external electrodes covering the portion of each of the two main surfaces, and includes a metal component and a protective material. When each of the two spacers is divided into two regions in the length direction along a line extending in the lamination direction, a region closer to a middle portion in the length direction of the capacitor main body has a higher content ratio of the protective material than a region farther from the middle portion.
<2> A multilayer ceramic electronic component includes: a capacitor main body including a multilayer body including dielectric layers and internal electrode layers that are alternately laminated, two main surfaces that are opposed to each other in a lamination direction, two end surfaces that are opposed to each other in a length direction intersecting the lamination direction, and two lateral surfaces that are opposed to each other in a width direction intersecting the lamination direction and the length direction, and two external electrodes that are each on a corresponding one of the two end surfaces, each connected to the internal electrode layers, and each extend to the two main surfaces and the two lateral surfaces to cover a portion of each of the two main surfaces and a portion of each of the two lateral surfaces; and two spacers that are on one of the two main surfaces or one of the two lateral surface of the capacitor main body, the two spacers being respectively adjacent to one of the two end surfaces and adjacent to one other of the two end surfaces with a corresponding one of the two external electrodes respectively covering the portion of each of the two main surfaces or the portion of each of the two lateral surfaces interposed between the capacitor main body and a corresponding one of the two spacers. Each of the spacers includes a metal component and a protective material. When each of the two spacers is divided into two regions in the length direction along a line extending in the lamination direction, a region closer to a middle portion in the length direction of the capacitor main body has a higher content ratio of the protective material than a region farther from the middle portion. A reinforcement member is provided between the two external electrodes.
<3> In the multilayer ceramic electronic component as described in <1> or <2>, the protective material includes a resin.
<4> In the multilayer ceramic electronic component as described in any one of <1> to <3>, when each of the spacers is divided into three regions in the lamination direction, a region closest to the capacitor main body has a higher content ratio of the protective material than a region farthest from the capacitor main body.
<5> In the multilayer ceramic electronic component as described in <4>, among the three regions divided in each of the two spacers, a content ratio of the protective material decreases in order from the region closer to the capacitor main body toward the region farther from the capacitor main body.
<6> In the multilayer ceramic electronic component as described in any one of <1> to <5>, when each of the spacers is divided into four regions in the length direction, a region closest to the middle portion in the length direction of the capacitor main body has a highest content ratio of the protective material, and a region second closest to the middle portion in the length direction of the capacitor main body has a second highest content ratio of the protective material.
<7> In the multilayer ceramic electronic component as described in any one of <1> to <6>, a reinforcement member is provided between the two external electrodes, and a main component of the reinforcement member is identical to a main component of the protective material.
<8> In the multilayer ceramic electronic component as described in <7>, the reinforcement member is continuously provided in the length direction.

### EXPLANATION OF REFERENCE NUMERALS

1 multilayer ceramic capacitor
1A capacitor main body
2 multilayer body
3a first external electrode
3b second external electrode
4 spacer
4a first spacer
4b second spacer
5 reinforcement member
6 protective material
11 inner layer portion
12 outer layer portion
14 dielectric layer
15 internal electrode layer
51 reinforcement member paste
61 protective material paste

## Claims

1. A multilayer ceramic electronic component comprising:
a capacitor main body including a multilayer body including dielectric layers and internal electrode layers that are alternately laminated, two main surfaces that are opposed to each other in a lamination direction, two end surfaces that are opposed to each other in a length direction intersecting the lamination direction, and two lateral surfaces that are opposed to each other in a width direction intersecting the lamination direction and the length direction, and
two external electrodes that are each on a corresponding one of the two end surfaces, each connected to the internal electrode layers, and each extend to the two main surfaces and the two lateral surfaces to cover a portion of each of the two main surfaces and a portion of each of the two lateral surfaces; and
two spacers that are on one of the two main surfaces or one of the two lateral surface of the capacitor main body, the two spacers being respectively adjacent to one of the two end surfaces and adjacent to one other of the two end surfaces with a corresponding one of the two external electrodes respectively covering the portion of each of the two main surfaces or the portion of each of the two lateral surfaces interposed between the capacitor main body and a corresponding one of the two spacers, wherein
each of the two spacers is longer in the length direction than a corresponding one of the external electrodes covering the portion of each of the two main surfaces, and includes a metal component and a protective material, and
when each of the two spacers is divided into two regions in the length direction along a line extending in the lamination direction, a region closer to a middle portion in the length direction of the capacitor main body has a higher content ratio of the protective material than a region farther from the middle portion.

2. A multilayer ceramic electronic component comprising:
a capacitor main body including a multilayer body including dielectric layers and internal electrode layers that are alternately laminated, two main surfaces that are opposed to each other in a lamination direction, two end surfaces that are opposed to each other in a length direction intersecting the lamination direction, and two lateral surfaces that are opposed to each other in a width direction intersecting the lamination direction and the length direction, and
two external electrodes that are each on a corresponding one of the two end surfaces, each connected to the internal electrode layers, and each extend to the two main surfaces and the two lateral surfaces to cover a portion of each of the two main surfaces and a portion of each of the two lateral surfaces; and
two spacers that are on one of the two main surfaces or one of the two lateral surfaces of the capacitor main body, the two spacers being respectively adjacent to one of the two end surfaces and adjacent to one other of the two end surfaces with a corresponding one of the two external electrodes respectively covering the portion of each of the two main surfaces or the portion of each of the two lateral surfaces interposed between the capacitor main body and a corresponding one of the two spacers, wherein
each of the spacers includes a metal component and a protective material,
when each of the two spacers is divided into two regions in the length direction along a line extending in the lamination direction, a region closer to a middle portion in the length direction of the capacitor main body has a higher content ratio of the protective material than a region farther from the middle portion, and
a reinforcement member is provided between the two external electrodes.

3. The multilayer ceramic electronic component according to claim 1 or 2, wherein
the protective material includes a resin.

4. The multilayer ceramic electronic component according to any one of claims 1 to 3, wherein,
when each of the spacers is divided into three regions in the lamination direction,
a region closest to the capacitor main body has a higher content ratio of the protective material than a region farthest from the capacitor main body.

5. The multilayer ceramic electronic component according to claim 4, wherein,
among the three regions divided in each of the two spacers,
a content ratio of the protective material decreases in order from the region closer to the capacitor main body toward the region farther from the capacitor main body.

6. The multilayer ceramic electronic component according to any one of claims 1 to 5, wherein,
when each of the spacers is divided into four regions in the length direction,
a region closest to the middle portion in the length direction of the capacitor main body has a highest content ratio of the protective material, and a region second closest to the middle portion in the length direction of the capacitor main body has a second highest content ratio of the protective material.

7. The multilayer ceramic electronic component according to any one of claims 1 to 6, wherein
a reinforcement member is provided between the two external electrodes, and
a main component of the reinforcement member is identical to a main component of the protective material.

8. The multilayer ceramic electronic component according to claim 7, wherein
the reinforcement member is continuously provided in the length direction.
